# EUROPEAN PATENT APPLICATION

(11) **EP 1 941 982 A1**
(43) Date of publication of application: **09.07.2008**
(21) Application number: 07013589.2
(22) Date of filing: 11.07.2007
(51) Int. Cl.: B29C 45/14, B65H 35/00, B65H 37/00, B65H 20/18

(54) **Film feeding machine**

(30) Priority: 05.01.2007 CN 200710000130
(71) Applicant: Snyang Yu Enterprise Co., Ltd., Ta Li City Taichung Hsien (TW)
(72) Inventor: Yu, Tsung-Wen, Ta Li City Taichung Hsien (TW)
(74) Representative: Becker Kurig Straus

(57) **Abstract**

A film feeding machine (100) includes a drawing device (40) to draw a continuous film (99) out of a film base (30) to a predetermined position. The film (99) is held by a feeding device (20) and cut off by a cutting device (50) to have a film piece (991). The film piece (991) is fed to external equipment by the feeding device (20). The film feeding machine (100) is incorporated in a molding process having advantages of lower cost, lower defective ratio and high production efficiency.

## Description

### BACKGROUND OF THE INVENTION

### 1. Field of the Invention

The present invention relates to a transporting device, and more particularly to a film feeding machine.

### 2. Description of the Related Art

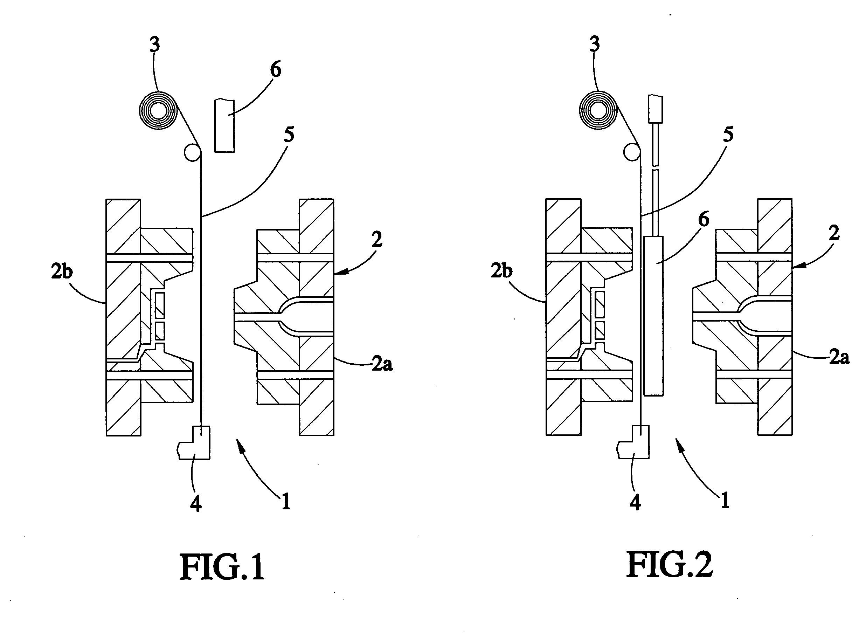

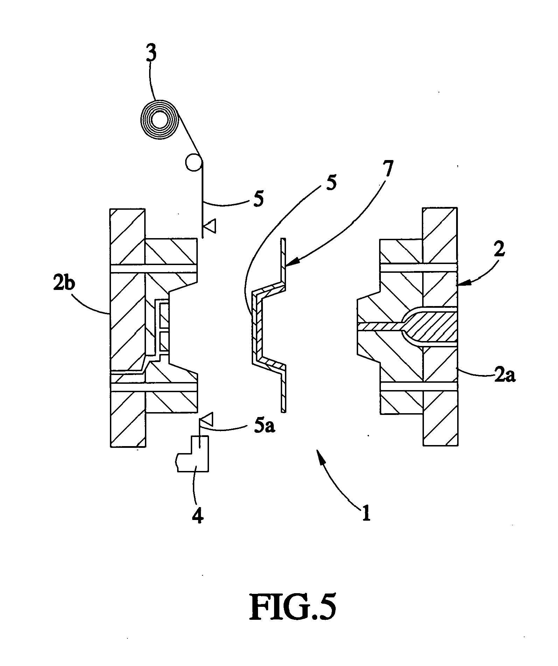

Thin film processes and tasks are incorporated in many industries. FIGS. 1 to 5 show a film feeding machine 1 and a die assembly 2 having a first die member 2a and a second die member 2b which are incorporated in a film molding process. The film feeding machine 1 includes a reel 3 and a clip device 3 above and under the die assembly 2. A roll of a film 5 is mounted on the reel 3 to provide the film 5 between the first die member 2a and the second die member 2b, and the clip device 4 holds the film at an opposite side of the die assembly 2. A heater 6 is moved to a position between the first die member 2a and the second die member 2b and moved toward the film 5 to press the film 5 on the second die member 2b and heat it. Next, the film 5 is suck on a sidewall of a recess of the second die member 2b by vacuum, and then the first die member 2a and the second die member 2b are combined together for injection molding process. After the injection molding process, the film 5 is cut off and the clip device 4 releases the residual film 5a (referring to FIG 5) to get a product 5 with the film on a surface thereof after the die assembly 2 is opened. Above steps may be repeated for mass production.

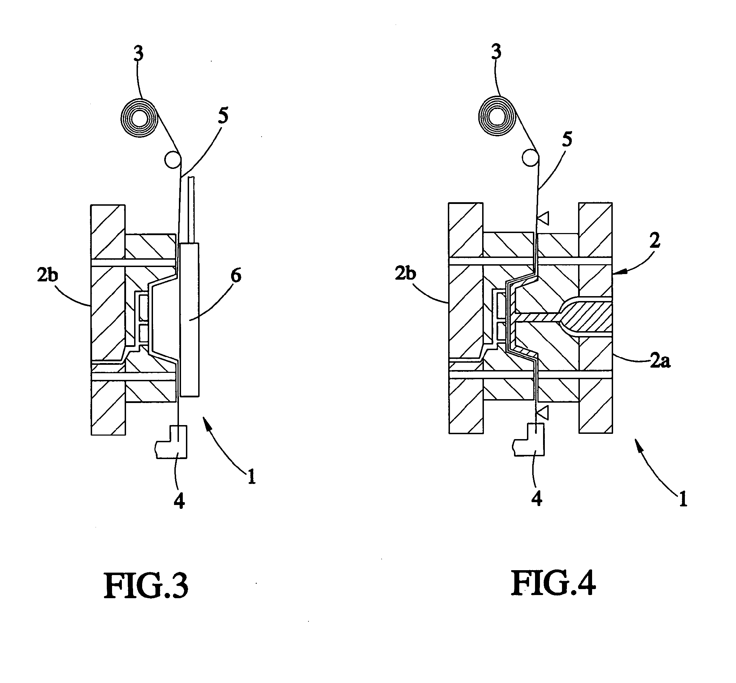

However, above process must have the clip device 4 to straight the film 5 from the roll and the film 5 must extend out of the die assembly 2 to be held by the clip device 4, therefore there always is a section of the film 5 being cut off every time when the product is molded. The cut-off film is waste (referring to FIG 4 and FIG 5) and there will be a greater amount of the film being waste in mass production. In addition, the reel 3 and the clip device 4 can not provide the film 5 with a precise tension that may cause the injection molding process failure. Again, the above process must include the step of cutting the film off that increases the time of the whole process. The heater 6 is an external device, which must have a controller to be operated, and it increases the space and cost for the whole equipment.

### SUMMARY OF THE INVENTION

The primary objective of the present invention is to provide a film feeding machine for the molding process that has advantages of lower cost, less space taken, lower defective ratio and high efficiency.

According to the objective of the present invention, a film feeding machine includes a frame. A film base is provided on the frame to carry a continuous film. A feeding device is moved along a first axis between an extended position and a retracted position for holding and transporting the film. A drawing device, which is located beside the first axis, draws the film out of the film base to a position to be held by the feeding device. A cutting device, which is beside the first axis and between the feeding device and the film base, cuts the film off to have a film piece.

### BRIEF DESCRIPTION OF THE DRAWINGS

FIG 1 to FIG 5 are sketch diagrams of the conventional equipment for the molding process;
FIG 6 is a perspective view of a preferred embodiment of the present invention;
FIG 7 is a rear view of FIG 6, showing the serve axle and the weight cylinder;
FIG 8 is an enlarged view in part of FIG 6;
FIG 9 is a perspective view of the film being drawn to the first position;
FIG. 10 is an enlarged view in part of FIG 9;
FIG. 11 is a perspective view of the drawing device, the first driving device and the cutting device;
FIG 12 is a perspective view of the first drawing member at the position before being moved by the cylinder;
FIG 13 is a perspective view of the first drawing member being moved by the cylinder along the first axis to the plane of the film;
FIG 14 is a perspective view of the film at the second position;
FIG 15 is an enlarged view in part of FIG 14;
FIG 16 shows the cutting device cutting the film into pieces;
FIG 17 is a front view of the arms before extended out; and
FIG 18 is a perspective view of the film feeding machine incorporated in the die assembly and injection molding machine.

### DETAILED DESCRIPTION OF THE INVENTION

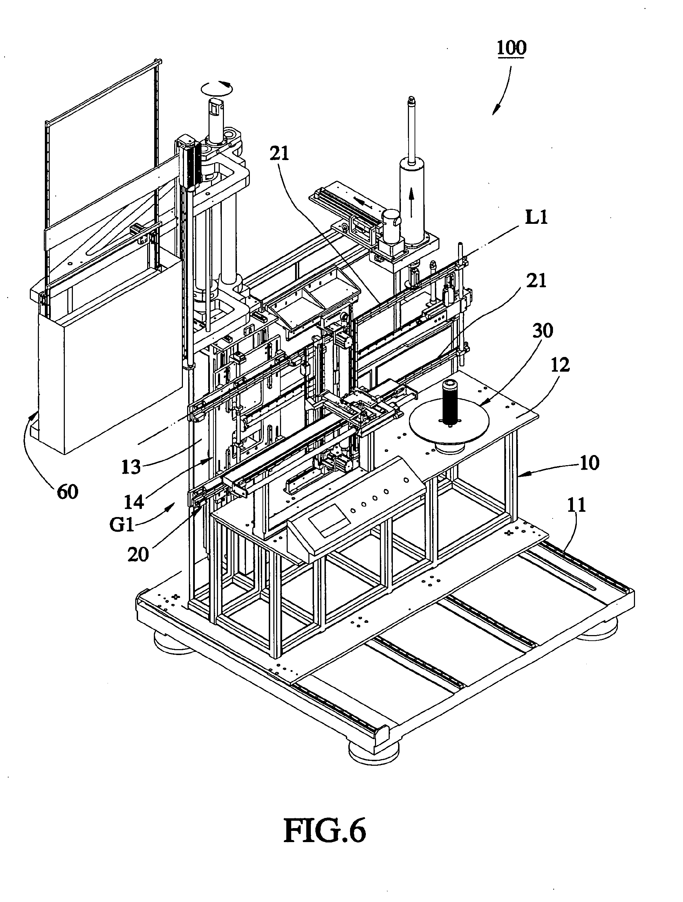

As shown in FIGS. 6 to 17, a film feeding machine 100 of the preferred embodiment of the present invention comprises a frame 10, a feeding device 20, a film base 30, a drawing device 40, a cutting device 50 and a heating device 60.

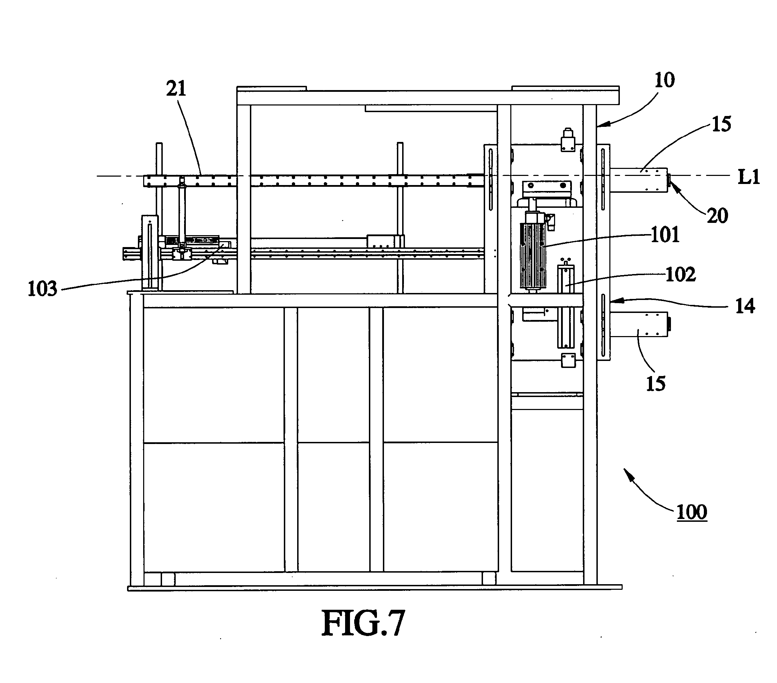

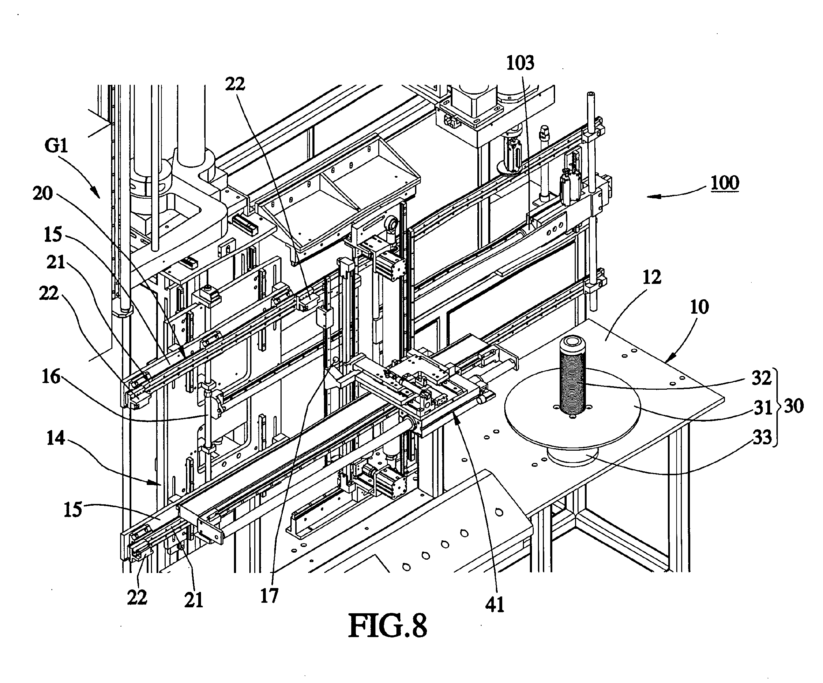

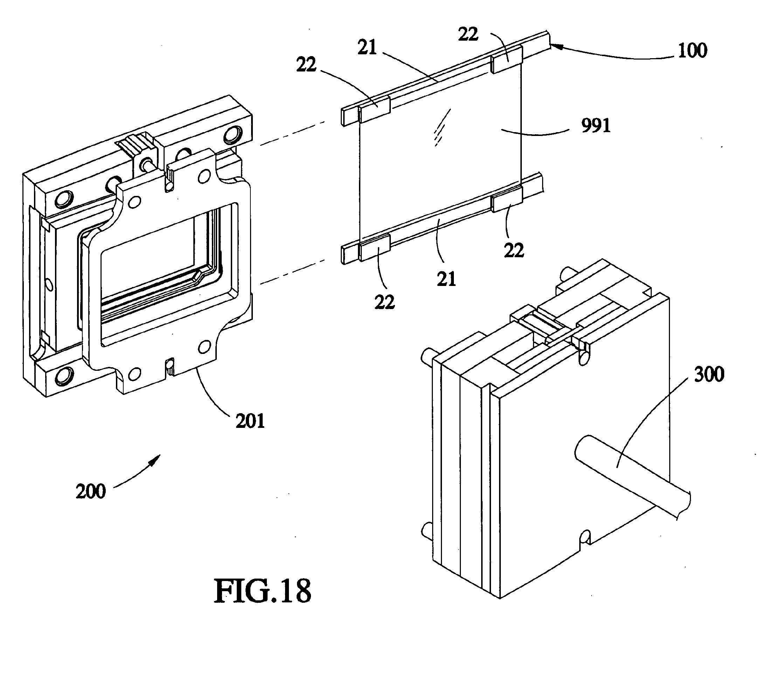

As shown in FIGS. 6 to 8, the frame 10 has a movable base 11 for horizontal movement, a horizontal plate 12 and a vertical plate 13. The film base is mounted on the horizontal plate 12, and a support base 14 and the feeding device 30 are mounted on the vertical plate 13. A plane where the feeding device 20 is located is defined as a first axis L1. As shown in FIG 7, the support base 14 is moved stably along the first axis L1 relative to the frame 10 by a serve axle 101 and a weight cylinder 102. The support base 14 includes two rail bases 15 (referring to FIG 8) to be moved by two opposite worms 16. As a result, the feeding device 20 on the support base 16 fits various sizes of films and may be adjusted in height to fit a die assembly 200 and an injection molding machine 300 (referring to FIG 18). The frame 10 is provided with a sensor 17 to sense targets printed on the film (not shown) for adjustment of the feeding device 20 along a direction perpendicular to the first axis L1 by the serve axle 101 and the weight cylinder 102 through a control system so that the film is positioned before being sent to an external device (which is the injection molding machine 300 shown in FIG 18).

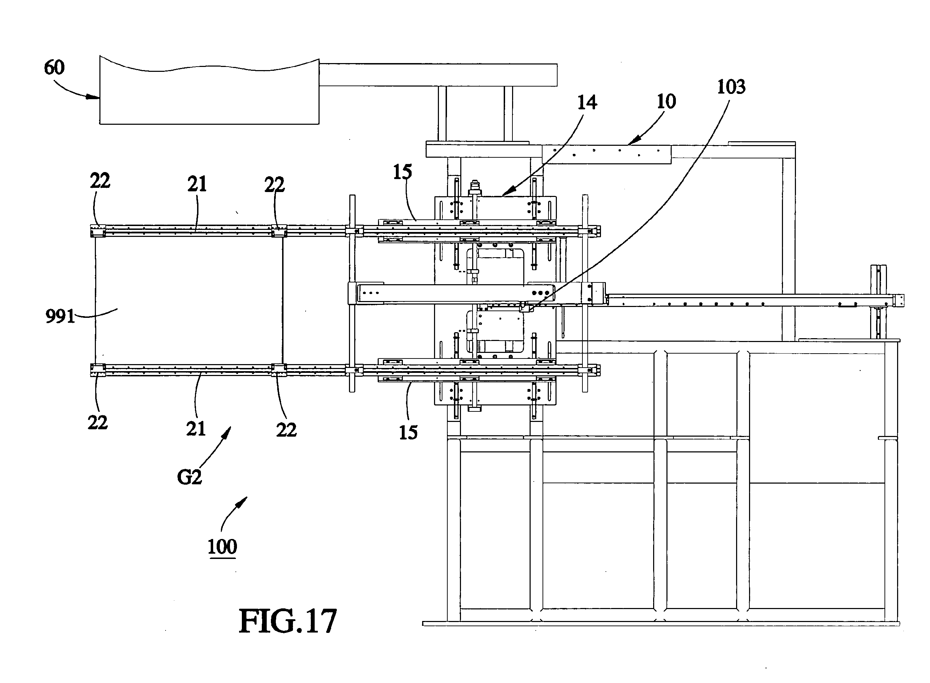

The feeding device 20 includes two arms 21, which are connected to the rail bases 15 of the support base 14. The arms 21 are moved by a serve axle 103 between a retracted position G1 (referring to FIG 6) and an extended position G2 (referring to FIG 17). The serve axle 103 is controlled by the sensor 17 also to adjust the feeding device 20 along the first axis L1 for position of the film. The arms 21 have a clip portion associated with two clip cylinders 22 respectively. The clip cylinders 22 may hold four corners of the film to transport it.

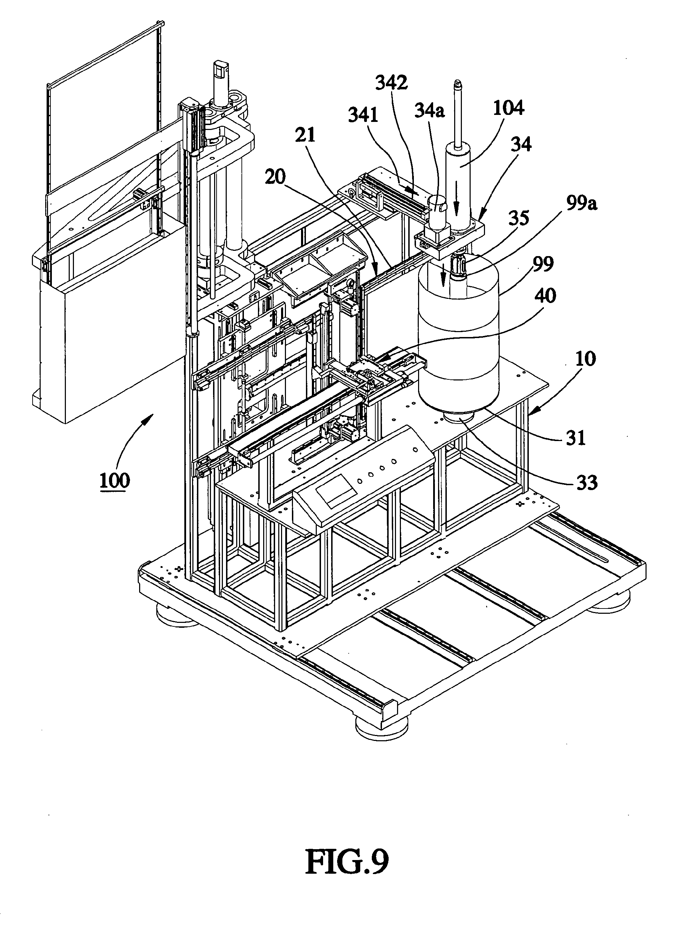

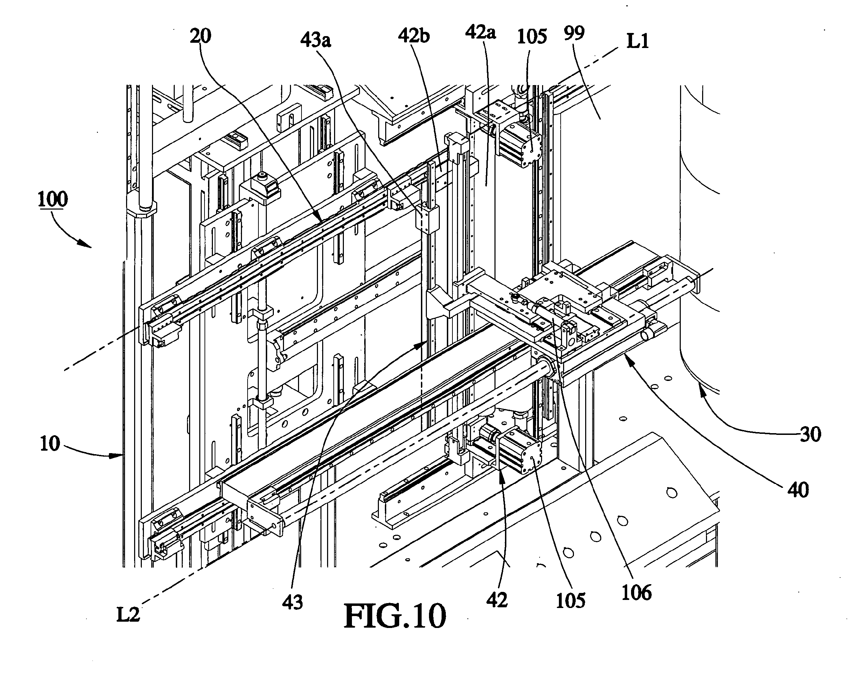

The film base 30 is mounted on the horizontal plate 12 of the frame 10, which has a carrier 31, a worm bar 32 and an adjusting member 33. The adjusting member 33 includes a block in the present embodiment to support the carrier 31. The block has an interior threaded section (not shown) to be meshed with the worm bar 32. As shown in FIG 9 and FIG 10, rolls of film 99 with various sizes may be fitted to the worm bar 32 and rested in the carrier 31. The adjusting member 33 is turned to align the film 99 with the arms 21 that the film 99 drawn out of the roll may be hold by the arms 21. The film base 30 works with a fixing device 21 on the frame 10 for the film 99. The roll of the film 99 includes a hollow core 99a. The fixing device 34 includes a base 341 for horizontal movement and a pneumatic cylinder 342 connected to the base 341 to move the base 341 backwards for loading the roll of the film 99 on the film base 30. The base 341 is moved forwards by the pneumatic cylinder 342 again over the roll of the film 99. The base 341 has a motor 34a to turn a fastener 35 and a cylinder 104 to move the fastener 35 up and down. The fastener 35 is a cylinder in the present embodiment, which is a conventional device and will not describe the detail here. The fastener 35 is driven by the cylinder 104 to extend into the hollow core 99a that the roll of the film 99 may be turned by the motor 34a of the fixing device 34.

As shown in FIGS. 10 to 13, the drawing device 40 is mounted beside the feeding device 20, which includes a first driving member 61, a first drawing member 42 and a second drawing member 43.

The first drawing member 42 is a serve axle provided on the frame 10 in the present embodiment for reciprocation along a second axis L2. The second axis L2 is an axial direction of the serve axle.

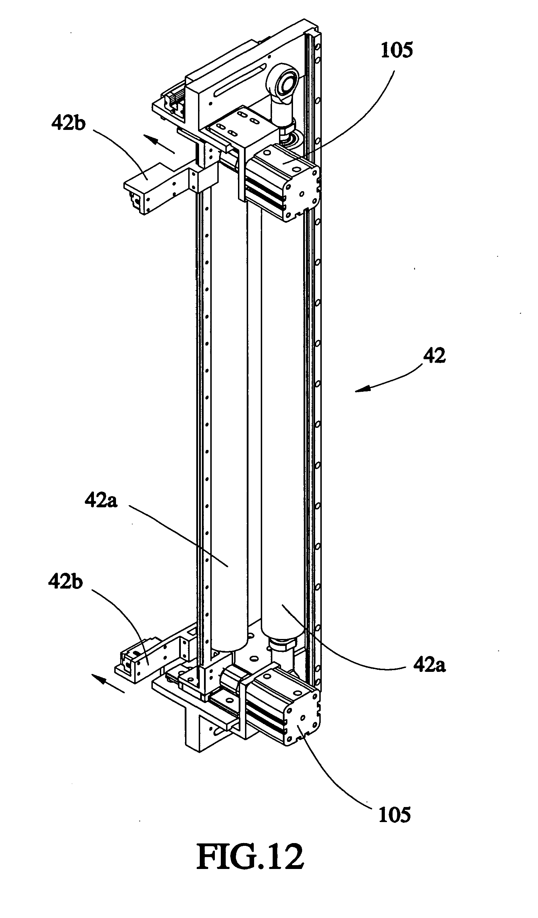

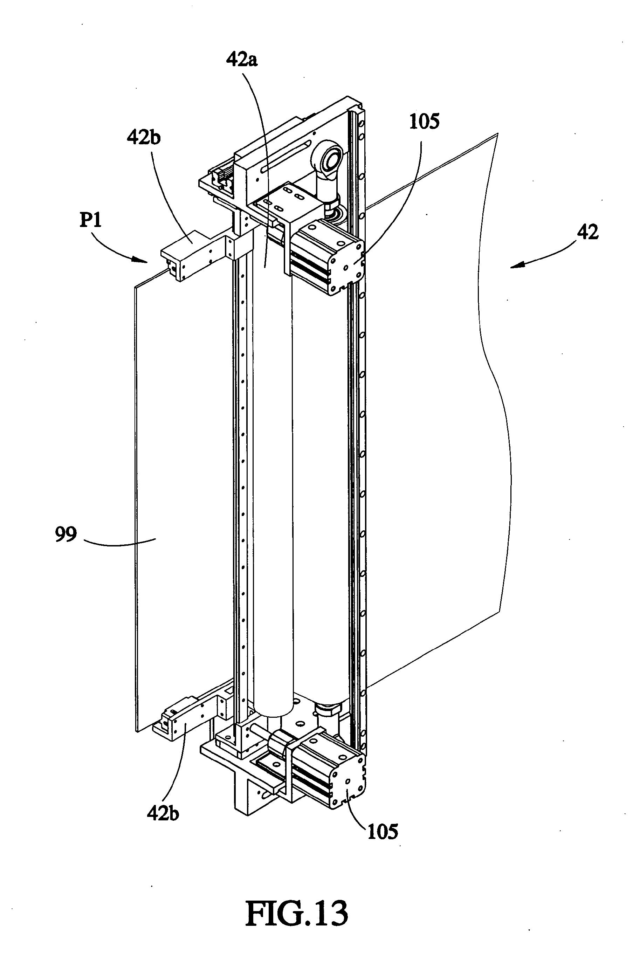

As shown in FIG. 12 and FIG 13, the first drawing member 42 is mounted on the frame 10 including a turning portion consisting of a set of rollers 42a, and a clip portion consisting of two clip cylinders 42b. The film 99 passes through rollers 42a to keep the direction of the film 99 and provide the film with a predetermined tension. The clip cylinders 42b may be adjusted to change a distance therebetween to fit various sizes of the films and may be moved by two cylinders 105 to a first position P1 (referring to FIG. 13) close to the first axis L1 to hold the film 99 from a position shown in FIG 12.

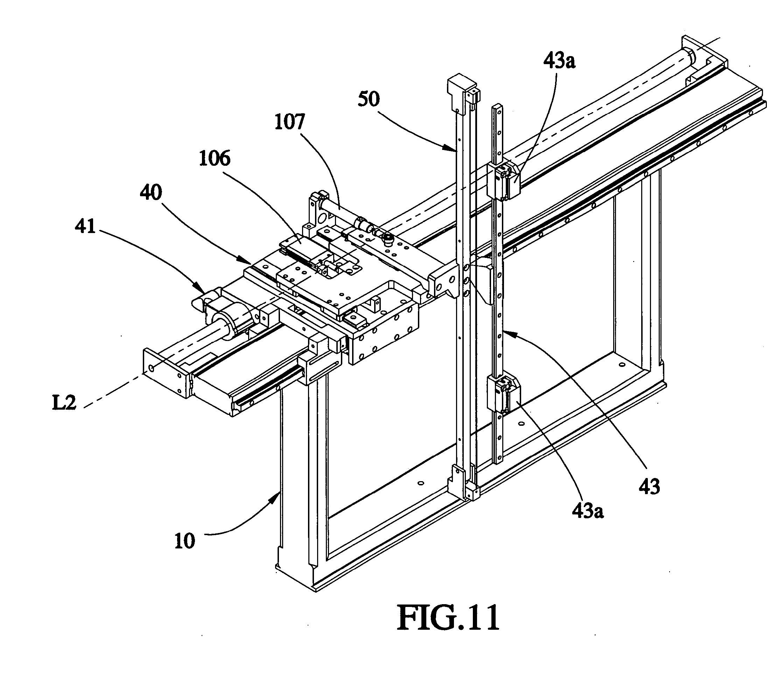

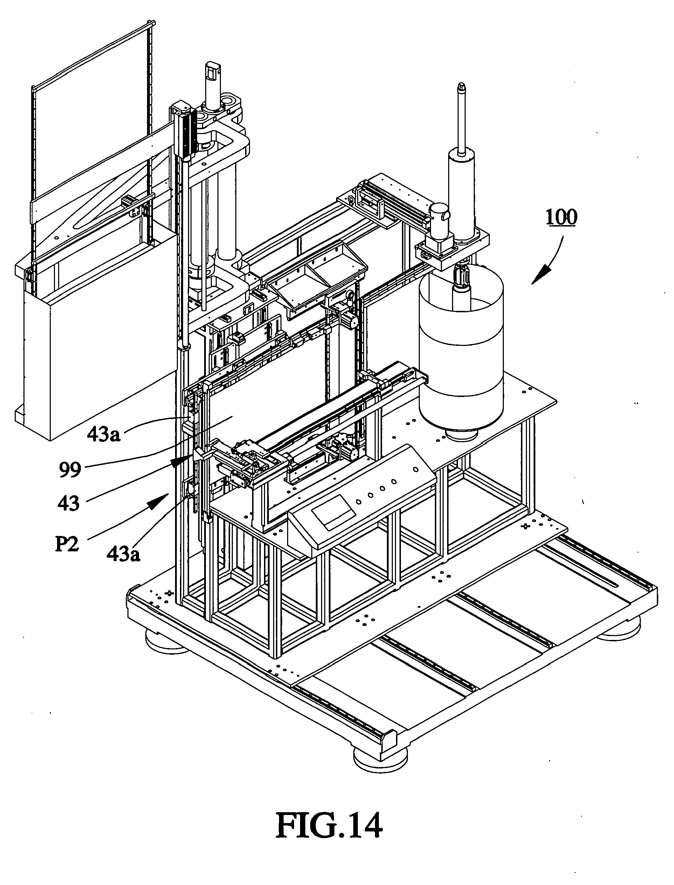

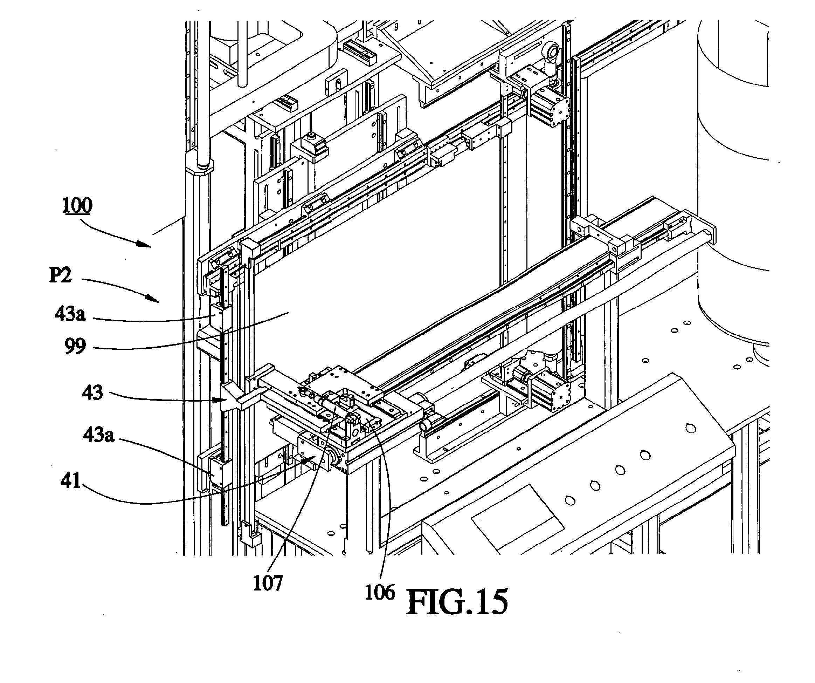

As shown in FIG 11, the second drawing member 43 has two clip cylinders 43a, which are connected to the first driving device 41 by a cylinder 106. The clip cylinders 43a are moved by the cylinder 106 toward the first axis L1 to a predetermined position for holding the film 99 and are moved by the first driving device 41 to move the film 99 between a first position P1, in which the film 99 is held by the first drawing member 42 (referring to FIG 13), and a second position P2, in which the film 99 is held by the feeding device 20 (referring to FIG 14 and FIG 15).

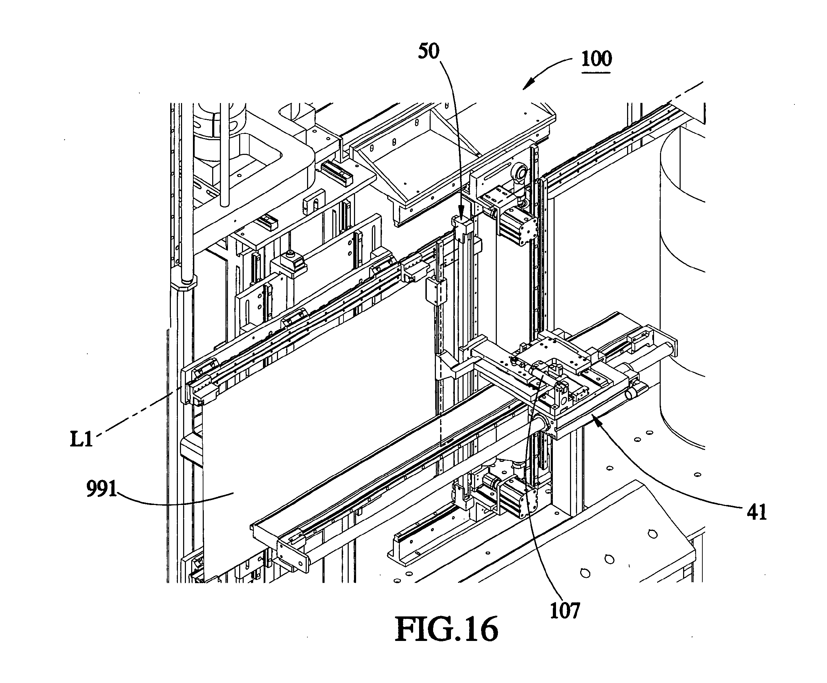

As shown in FIG 11, the cutting device 50 is connected to the first driving device 41 through a cylinder 107 to be moved toward the first axis L1 for cutting the film 99 off and get a film piece 991 (referring to FIG. 16).

As shown in FIG 6, the heating device 60 is pivoted on the frame 10 to be moved along a direction perpendicular to the first axis L1. The heating device 60 is moved beside the film piece 991 for heating it while the arms 21 of the feeding device 20 holds the film piece 991 and moves to the extended position G2 (referring to FIG 17). It takes less space. The heating device 60 may be may be leaned toward a front side of the frame 10 that provides a space for repair or other tasks.

As shown in FIG 18, in operation, the die assembly 200 and the injection molding machine 300 are fixed at predetermined positions, and the feeding machine 100 of the present invention is operated to have the arms 21 of the feeding device 20 moved by the serve axle 101 and the worm bars 16 to a desired position for feeding the film 99 into the die assembly 200. As shown in FIG. 9, after the arms 21 had been adjusted to a desired position, the film 99 is put on the film base 30, and a height of the film base 30 is adjusted to align the film 99 with the arms 21. Next, the clip cylinders 42b of the first drawing member 42 is moved to the position shown in FIG 13 from the position shown in FIG 12 to locate the clip cylinders 42b and the film 99 at the same level. The fixing device 34 is operated to hold and tension the film 99. Next, the film 99 is drawn out and passes through the rollers 42a of the first drawing member 42 and then held by clip cylinders 42b (referring to FIG 13). In the meantime, the motor 34a of the fixing device 34 turns backwards to draw the film 99 back that may provides the film a predetermined tension. Next, the second drawing member 43 is moved by the cylinder 106 to a plane where the film 99 is on, and the clip cylinders 43a hold the film 99 prior to the clip cylinders 42b of the first drawing member 42 release the film 99. The first driving device 41 is moved away from the film base 30 along the second axis L2 to have the second drawing member 43 drawing the film 99 to the second position P2 (referring to FIG. 14, in which the second drawing member 43 is over the two clip cylinders 22 of the arms 21 distal to the film base 30). Meanwhile, the two clip cylinders 22 of the arms 21 proximal to the film base 30 hold opposite sides of the film 99 first, and then the first driving device 41 moves the second drawing member 43 a little to rear ends of the arms 21, and then the other two clip cylinders 22 on the arms hold the opposite sides of the film 99 to keep the film 99 with a predetermined tension and flat. After the film 99 is held by the arms 21, the clip cylinders 43a of the second drawing member 43 release the film 99, and the first driving device moves the second drawing member 43 toward the rear ends of the arms 21 a little and the cylinder 106 moves the second drawing member 43 away from the film 99 that the second drawing member 43 will not touch the film 99. Next, the first driving device 41 moves the second drawing member 43 back to the position shown in FIG 16 to have the cutting device between the first drawing member 42 and the clip cylinder close to the film base 30. After that, the cylinders 42b of the first drawing member 42 hold the film 99 again and the cutting device 50 is moved by the cylinder 107 toward the first axis L1 to cut the film 99 off. Because the film 99 is held at opposite sides of the cutting device 50, the film 99 and the film piece 991 keep flat still. After the film 99 is cut, the clip cylinders 42b of the first drawing member 42 moved back along the second axis L2 to the position shown in FIG. 12. Next, the sensor 17 (such as sensing cylinder) senses targets (not shown) on the film 99 automatically to control the serve axles 101 1 and 103 precisely adjusting the position of the film piece 991. After that, the film feeding machine 100 is waiting for the order of the external equipment. In the present embodiment the external equipment is the die assembly 200 and the injection molding machine 300. When the film feeding machine 100 receives the order of the external equipment (it means the die assembly 200 and the injection molding machine 300 are ready), the arms 21 move into the die assembly 200, and a plate 201 of the die assembly 200 will hold the film piece 991. After that, the clip cylinders 22 release the film 99 and back to the feeding machine 100. Next, the heating device 60 is moved downward into the die assembly to heat the film piece 991. The heating device 60 is moved back to the feeding machine after a setting time to let the die assembly 200 and the injection molding machine 300 performing the injection molding process. When the injection molding process is proceeding, the feeding machine 100 proceeds above steps to ready another film piece 991 so that when injection molding process is done and the die assembly 200 is opened to get a product out, the feeding machine 100 may feed the film piece 991 into the die assembly 200 without any time delay. In addition, because the film piece 991 had been cut and positioned before being fed into the die assembly 200. It doesn't like the conventional process having the film being cut and positioned in the die assembly that causes the problems of film waste and higher defective ratio. The feeding machine 100 and the heating device 60 have the same frame 10 and controller that have a lower cost and less space taken.

The description above is a preferred embodiment of the present invention and the equivalence of the present invention is still in the scope of the claim of the present invention.

## Claims

1. A film feeding machine (100), comprising:
a frame (10); and
a film base (30) provided on the frame (10) to carry a continuous film (99);
wherein the film feeding machine (100) is **characterized in** comprising:
a feeding device (20) moved along a first axis (L1) between an extended position (G2) and a retracted position (G1) for holding and transporting the film (99);
a drawing device (40), which is located beside the first axis (L1), to draw the film (99) out of the film base (30) to a position for being held by the feeding device (20); and
a cutting device (50), which is located beside the first axis (L1) and between the feeding device (20) and the film base (30), for cutting the film (99) off to have a film piece (991).

2. The film feeding machine (100) as defined in claim 1, wherein the drawing device (40) includes a first drawing member (42) and a second drawing member (43), which the first drawing member (42) fix the film (99) drawn out of the film base (30) at a first position and the second drawing member (43) draws the film (99) to a second position, in which the film (99) may be held by the feeding device (20), from the first position.

3. The film feeding machine (100) as defined in claim 2, wherein the first drawing member (42) is mounted on the frame (30) and has a turning portion to fix the film (99) along a direction of the film (99) being drawn out of the film base (30), and the drawing device (40) further includes a first driving device (41) mounted on the frame (30) and movable along a second axis (L2), to which the second drawing member (43) is connected.

4. The film feeding machine (100) as defined in claim 3, wherein the turning portion is a set of rollers (42a), between which film (99) passes through.

5. The film feeding machine (100) as defined in claim 4, wherein the first drawing member (42) includes a clip portion to be moved a predetermined beside the first axis (L1) for holding the film (99) at the first position.

6. The film feeding machine (100) as defined in claim 3, wherein the cutting device (50) is connected to the first driving device (41) to be moved by the first driving device (41) toward the first axis (L1) for cutting the film (99) off.

7. The film feeding machine (100) as defined in claim 1, wherein the frame (30) has a support base (14), on which the feeding device (20) is provided to be moved along the first axis (L1), and the support base (14) is movable relative to the frame (30) along a direction substantially perpendicular to the first axis (L1).

8. The film feeding machine (100) as defined in claim 7, wherein the support base (14) is provided with two rail bases (15), and the feeding device (20) includes two arms (21), which are connected to the rail bases (15) respectively, to be operated for movement relative to the rail bases (15) along the first axis (L1), and a clip portion to hold the film (99).

9. The film feeding machine (100) as defined in claim 8, wherein rail bases (15) are movable relative to each other.

10. The film feeding machine (100) as defined in claim 1, wherein the film base (30) includes an adjusting member (33) to move the film (99) to a desired position and held by the feeding device (20) after being drawn out.

11. The film feeding machine (100) as defined in claim 1, further comprising a fixing device (34) including a motor (34a) driving a fastener (35) and a cylinder (104) moving the fastener (35) up and down, wherein the fastener (35) is a cylinder for extension and retraction.

12. The film feeding machine (100) as defined in claim 1, wherein the frame (30) is provided with a sensor (17) to sense the film (99) for controlling the feeding device (20) moving along the first axis (L1) and along the direction perpendicular to the first axis (L1).

13. The film feeding machine (100) as defined in claim 1, further comprising a heating device (60) provided on the frame (30) to be moved along a direction perpendicular to the first axis (L1), wherein when the feeding device (20) holds the film (99) and moves to the extended position, the heating device (60) is moved to a position associated with the film (99).
